# EUROPEAN PATENT APPLICATION

(11) **EP 1 465 176 A1**
(43) Date of publication of application: **06.10.2004**
(21) Application number: 03700465.2
(22) Date of filing: 07.01.2003
(51) Int. Cl.: G11B 11/105

(54) **MAGNETIC HEAD DEVICE**

(30) Priority: 10.01.2002 JP 2002003079
(71) Applicant: Matsushita Electric Industrial Co., Ltd., Kadoma-shi, Osaka 571-8501 (JP)
(72) Inventor: MURAKAMI, Yutaka, Hirakata-shi, Osaka 573-0163 (JP); KUBO, Kenji, Ikoma-shi, Nara 630-0141 (JP); MIZUNO, Osamu, Osaka-shi, Osaka 546-0033 (JP); TOMITA, Hironori, Ikoma-shi, Nara 630-0141 (JP)
(74) Representative: Tothill, John Paul
(86) International application number: PCT/JP2003/000032
(87) International publication number: WO 2003/060901

(57) **Abstract**

A first lifting/lowering section (21) is disposed on the information recording medium side of a support member (6) having a head main body (5) attached to the free end thereof, while a second lifting/lowering section (22) is disposed on the side opposite to the information recording medium of the support member (6) and nearer to the fixed end side than the first lifting/lowering section (21) is. The first lifting/lowering section (21) moves away from information recording medium to abut against the lower surface of the support member (6) so as to lift the head main body (5), during which process the second lifting/lowering section (22) abuts against the upper surface of the elastic section (10) of the support member (6). Since the head main body (5) is pivoted around the abutment between the second lifting/lowering section (22) and the elastic section (10), the amount of movement of the first lifting/lowering section (21) required to lift the head main body (5) to a predetermined height can be further reduced. Thus, the maximum height of the magnetic head (4) as measured from the information recording medium (1) when the head main body (5) is lifted can be reduced. Therefor, the information recording/reproducing device can be reduced in thickness.

## Description

### Technical Field

The present invention relates to a magnetic head device, and it relates in particular to a magnetic head device that can reduce the thickness of an information recording/ reproducing apparatus.

### Background Art

A magneto-optical recording/ reproducing apparatus includes an optical head on one side of a magneto-optical disk, which serves as an information recording medium, that is rotated by a driving mechanism for rotating the disk, and a magnetic head that is opposed to the optical head on the other side of the magneto-optical disk; the optical head emits a light beam for irradiating a magneto―optical recording layer of the information recording medium, and the magnetic head applies an external magnetic field to the magneto-optical recording layer. The magneto―optical recording/reproducing apparatus applies a magnetic field, whose direction is modulated in accordance with the information signal to be recorded, from the magnetic head onto the magneto―optical recording layer of the rotating magneto―optical disk, while it focuses and irradiates a light beam emitted from the optical head onto the magneto-optical recording layer.

This light beam irradiation heats a portion of the magneto-optical recording layer to a temperature above the Curie temperature, so that this portion loses its coercive force. After this portion has been magnetized in the direction of the magnetic field applied by the magnetic head, this portion is moved relative to the light beam by rotation of the magneto-optical disk, so that this portion is cooled below the Curie temperature and the magnetization direction is fixed. Thus, an information signal is recorded in the magneto-optical recording layer.

Since the magneto-optical disk is rotated, the surface thereof is likely to vibrate. Thus, in the magnetic head, a head main body is provided at a free end of a cantilevered supporting member that can move in the direction of surface vibration of the magneto-optical disk. This head main body includes a slider that is provided with a magnetic field applying portion and glides in contact over the magneto―optical disk or floats keeping a slight distance from the magneto-optical disk.

The magnetic head device takes a first position in which the slider glides in contact over or floats on the magneto―optical disk so that the slider and the magneto-optical disk come close to each other in a recording state, and a second position in which the free end of the supporting member and the head main body are spaced away from the magneto-optical disk by a magnetic head lifting/ lowering device of the magnetic head device so as to be in a reproducing state.

A conventional magnetic head device is described in, for example, JP 10(1998)-802882 A (JP Patent Application No. 10(1998)-505847).

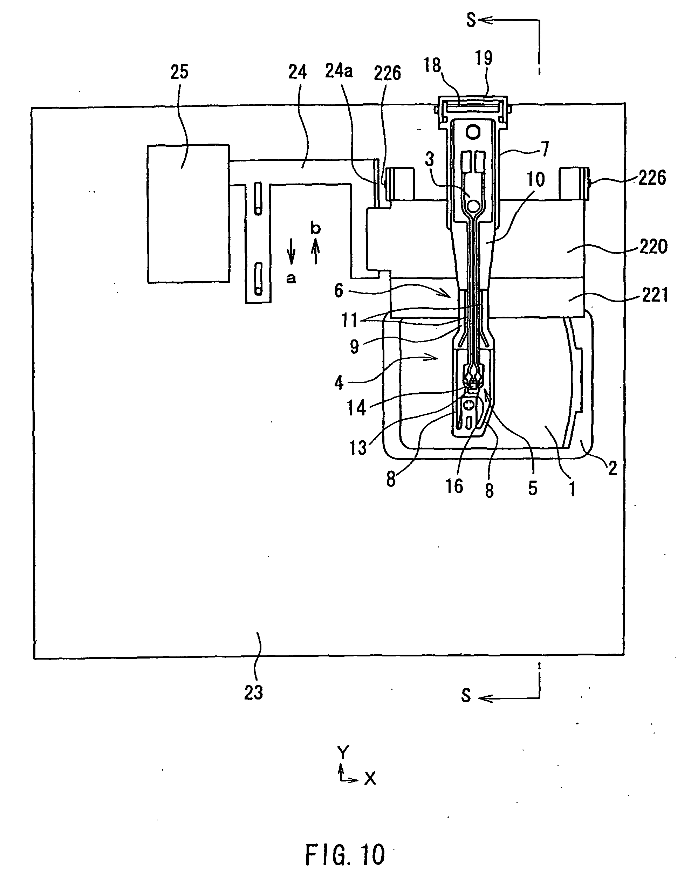

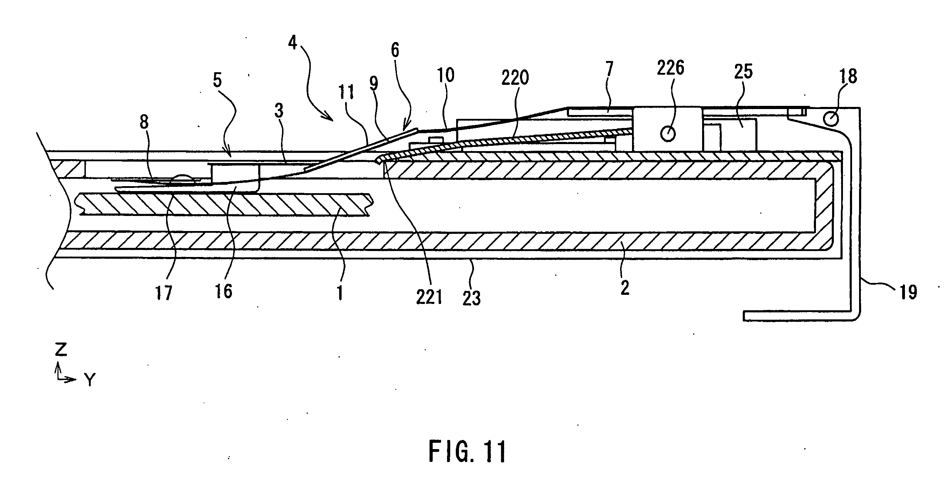

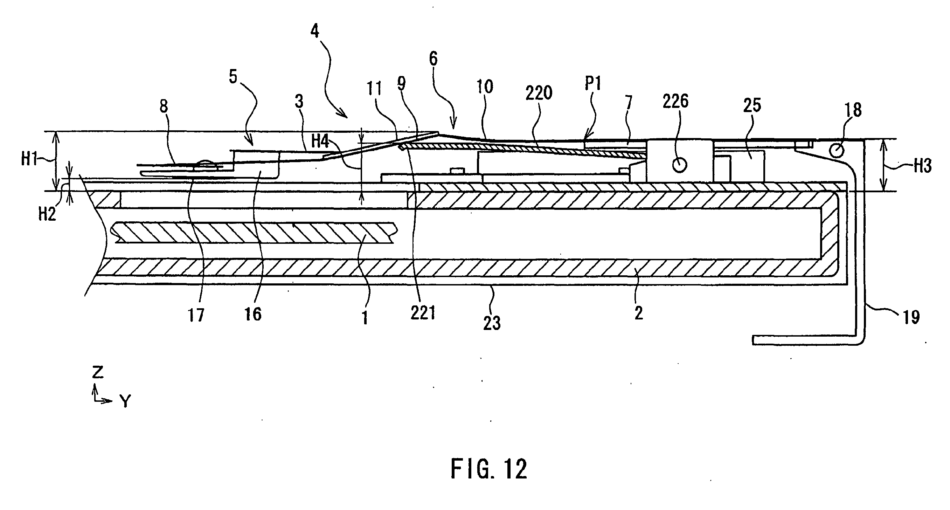

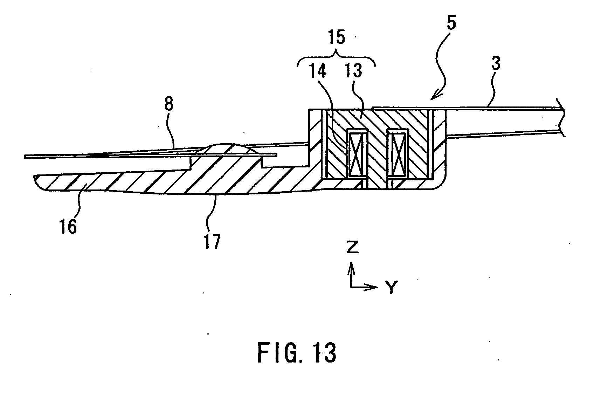

The following is a description of the conventional magnetic head device, with reference to FIGs. 10 to 13. FIG. 10 is a plan view of an example of the conventional magnetic head device. As shown in the figure, an XYZ three―dimensional rectangular coordinate system is defined such that an X axis indicates a radial direction of an magneto-optical disk 1, a Y axis indicates a tangential direction thereof, and a Z axis indicates a normal direction thereof. FIG. 11 is a sectional side view of the magnetic head device shown in FIG. 10, taken along a line S-S and seen from an arrow direction, in the first position (recording state). FIG. 12 is a sectional side view of the magnetic head device shown in FIG. 10, taken along the line S-S and seen from the arrow direction, in the second position (reproducing state). FIG. 13 is a sectional side view of a head main body of the magnetic head device shown in FIG. 10.

The conventional magnetic head device includes a head main body 5, a thin supporting member 6 for pressing a sliding portion 17 of the head main body 5 against the surface of the magneto―optical disk 1, and a fastening portion 7 to which one end of the supporting member 6 is attached. The head main body 5 is attached to the other end (free end) of the cantilevered supporting member 6 by gluing, welding or the like.

As shown in FIG. 13, the head main body 5 includes a magnetic head element 15 formed by attaching a wound coil 14 to a central magnetic pole of an E-shaped magnetic core 13 made of a soft magnetic material such as ferrite and a slider 16 that has the sliding portion 17 gliding directly in contact over the magneto-optical disk 1 and is made of a resin with excellent sliding characteristics, for example, polyphenylene sulfide or liquid crystal polymer. This magnetic head element 15 is attached integrally to the slider 16 by glue―fixing or integral molding of a resin.

The supporting member 6 is formed with a thin plate made of a material such as SUS304 or BeCu. The supporting member 6 has a first spring system 10 serving as a first elastic deformable portion that has one end fastened to the fastening portion 7 and is provided for following surface vibration of the magneto―optical disk 1 and applying a load to the head main body 5 in the direction of the magneto-optical disk 1 in the first position for recording on the magneto-optical disk 1, an intermediate portion 9 that is extended from the first spring system 10 while being inclined with respect to this first spring system 10 at a predetermined angle so as not to interfere with a cartridge 2 and formed to be a rigid body by being provided with draw ribs 11 formed by draw forming on both sides in the width direction, and a second spring system 8 serving as a second elastic deformable portion that is extended from the intermediate portion 9 and provided for following the surface shape of the magneto―optical disk 1.

A flexible printed board 3 has one end adhered to the head main body 5 and the other end adhered to the vicinity of the fastening portion 7 of the supporting member 6. One end of the flexible printed board 3 is soldered to both ends of lead wires of the coil 14, while the other end is connected to a magnetic head driving circuit, which is not shown in the figure.

The fastening portion 7 is made of a metal plate of such as iron or stainless steel. The fastening portion 7 fastens one end of the supporting member 6 and is attached in a freely rotatable manner to a joint member 19 for joining the optical head, which is not shown, and the magnetic head 4 via a shaft 18 and forced against the side of the magneto―optical disk 1 by a spring or the like, which is not shown in the figure.

The following is a description of a magnetic head lifting/ lowering device for moving the head main body 5 from the first position to the second position. A lifting mechanism 220 is disposed between the magnetic head 4 and a holder 23 for holding the cartridge 2 in which the magneto-optical disk 1 is received, and is attached in a freely rotatable manner around a lifting/lowering rotation shaft 226 provided in the holder 23. A sliding member 24 is attached to the holder 23 and can slide in a Y direction in FIG. 10 by a lifting/ lowering driving portion 25, which is constituted by a motor, a gear etc. and attached to the holder 23. In a part of the sliding member 24, an inclined surface 24a whose height in a Z―axis direction varies is formed along the Y―axis direction. The lifting mechanism 220 is forced by an elastic member such as a spring (not shown) so that its lower surface presses the inclined surface 24a of the sliding member 24. In this manner, a cam mechanism is formed in a portion where the inclined surface 24a of the sliding member 24 contacts the lifting mechanism 220. The lifting mechanism 220 and the sliding member 24 are formed with a thin resin plate or a thin metal plate made of stainless steel or iron, for example. In a portion of the lifting mechanism 220 where it contacts the magnetic head 4 when the head main body 5 is moved to the second position, a curved lifting/lowering portion 221 is provided.

In the first position (recording position) of the head main body 5, namely, in the state that the sliding portion 17 glides in contact over the magneto―optical disk 1 as shown in FIG. 11, the first spring system 10 for applying the load in the direction that the head main body 5 is brought in contact with the magneto-optical disk 1 and the second spring system 8 that is displaced according to the surface vibration of the magneto-optical disk 1 and the change in surface shape thereof cause the sliding portion 17 to follow the surface vibration of the magneto-optical disk 1 and the change in surface shape thereof and glide in contact over the disk constantly.

In this case, the lifting/lowering portion 221 of the lifting mechanism 220 is retracted on the side of the magneto-optical disk 1 so as not to contact the magnetic head 4.

The head main body 5 is moved from the first position (recording position) to the second position (reproducing position) as follows. The lifting/lowering driving portion 25 drives the sliding member 24 to slide in the direction indicated by an arrow *a* shown in FIG. 10. The inclined surface 24a constituting the cam mechanism contacts the lower surface of the lifting mechanism 220 and lifts the lifting mechanism 220 so as to rotate the lifting mechanism 220 around the lifting/ lowering rotation shaft 226, so that the lifting/lowering portion 221 moves away from the magneto―optical disk 1. Then, the lifting/ lowering portion 221 contacts the lower surface (the surface on the side of the magneto―optical disk 1) of the intermediate portion 9 of the magnetic head 4 so as to deform the first spring system 10 elastically, so that the head main body 5 is moved away from the magneto-optical disk 1 and lifted up to the position at which the head main body 5 is spaced from the cartridge 2 by a gap H2, namely, the second position. At the time when the head main body 5 is moved away from the magneto―optical disk 1, an end portion (P1) of the first spring system 10 on the side of the fastening portion 7 serves as the center of rotation.

Accompanying the recent popularization of small-size portable appliances, apparatus have become thinner and thinner, and the thickness of the magnetic head device 4 and the height H3 from the upper surface of the cartridge 2 to the fastening portion 7 have been reduced. However, in the structure of the conventional magnetic head and the magnetic head lifting/lowering device described above, the displacement amount of the lifting/lowering portion 221 has to be increased for moving the head main body 5 to the second position. In other words, in order to space the head main body 5 sufficiently away from the magneto―optical disk 1 in the second position, it is necessary to space the lifting/lowering portion 221 itself considerably away from the cartridge 2 (see a height H4 in FIG. 12). Consequently, the supporting member 6, in particular, a bent portion connecting the first spring system 10 and the intermediate portion 9 protrudes greatly beyond the fastening portion 7 (in other words, a height H1 of the protruding portion from the upper surface of the cartridge 2 is great). As a result, there has been a problem in that the magneto―optical recording/ reproducing apparatus cannot be made thinner.

### Disclosure of Invention

It is an object of the present invention to solve the conventional problem described above and to provide a magnetic head device that can reduce the thickness of an information recording/ reproducing apparatus.

In order to achieve the above-mentioned object, a first magnetic head device of the present invention includes a magnetic head including a cantilevered supporting member having one end serving as a fastened end, the other end serving as a free end and an elastic portion between the fastened end and the free end, and a head main body attached to the free end of the supporting member; a first lifting/ lowering portion that is disposed on a side of an information recording medium with respect to the supporting member; and a second lifting/ lowering portion that is disposed on a side opposite to the information recording medium with respect to the supporting member and on a side of the fastened end with respect to the first lifting/lowering portion. The magnetic head has a first position in which the head main body is located close to or in contact with the information recording medium so as to perform recording or reproducing and a second position in which the head main body is away from the information recording medium. While the first lifting/ lowering portion moves away from the information recording medium and contacts a surface of the supporting member on a side of the information recording medium so as to move the head main body from the first position to the second position, the second lifting/ lowering portion contacts a surface of the elastic portion of the supporting member on a side opposite to the information recording medium.

Further a second magnetic head device of the present invention includes a magnetic head including a cantilevered supporting member having one end serving as a fastened end, the other end serving as a free end and an elastic portion between the fastened end and the free end, and a head main body attached to the free end of the supporting member; a first lifting/lowering portion that is disposed on a side of an information recording medium with respect to the supporting member; and a second lifting/lowering portion that is disposed on a side opposite to the information recording medium with respect to the supporting member and on a side of the fastened end with respect to the first lifting/lowering portion. The magnetic head has a first position in which the head main body is located close to or in contact with the information recording medium so as to perform recording or reproducing and a second position in which the head main body is away from the information recording medium. While the first lifting/ lowering portion moves along a longitudinal direction of the magnetic head and contacts a surface of the supporting member on a side of the information recording medium so as to move the head main body from the first position to the second position, the second lifting/lowering portion contacts a surface of the elastic portion of the supporting member on a side opposite to the information recording medium.

### Brief Description of Drawings

FIG. 1 is a plan view showing a magnetic head device according to a first embodiment of the present invention.
FIG. 2 is a sectional side view of the magnetic head device according to the first embodiment of the present invention, taken along a line S-S and seen from an arrow direction in FIG. 1 when a head main body is in a first position.
FIG. 3 is a sectional side view of the magnetic head device according to the first embodiment of the present invention, taken along the line S-S and seen from the arrow direction in FIG. 1 when the head main body is in a second position.
FIG. 4 is a plan view showing a magnetic head device according to a second embodiment of the present invention.
FIG. 5 is a sectional side view of the magnetic head device according to the second embodiment of the present invention, taken along a line S-S and seen from an arrow direction in FIG. 4 when a head main body is in a first position.
FIG. 6 is a sectional side view of the magnetic head device according to the second embodiment of the present invention, taken along the line S-S and seen from the arrow direction in FIG. 4 when the head main body is in a second position.
FIG. 7 is a plan view showing a magnetic head device according to a third embodiment of the present invention.
FIG. 8 is a sectional side view of the magnetic head device according to the third embodiment of the present invention, taken along a line S―S and seen from an arrow direction in FIG. 7 when a head main body is in a first position.
FIG. 9 is a sectional side view of the magnetic head device according to the third embodiment of the present invention, taken along the line S-S and seen from the arrow direction in FIG. 7 when the head main body is in a second position.
FIG. 10 is a plan view showing a conventional magnetic head device.
FIG. 11 is a sectional side view of the conventional magnetic head device, taken along a line S-S and seen from an arrow direction in FIG. 10 when a head main body is in a first position.
FIG. 12 is a sectional side view of the conventional magnetic head device, taken along the line S-S and seen from the arrow direction in FIG. 10 when the head main body is in a second position.
FIG. 13 is a sectional side view showing the head main body of the conventional magnetic head device.

### Best Mode for Carrying Out the Invention

The first and second magnetic head devices of the present invention include a magnetic head including a cantilevered supporting member and a head main body attached to the free end of the supporting member, a first lifting/ lowering portion that is disposed on a side of the information recording medium with respect to the supporting member, and a second lifting/ lowering portion that is disposed on a side opposite to the information recording medium with respect to the supporting member and on a side of the fastened end with respect to the first lifting/ lowering portion.

In the first magnetic head device, while the first lifting/ lowering portion moves away from the information recording medium and contacts a surface of the supporting member on a side of the information recording medium so as to move the head main body from the first position to the second position, the second lifting/ lowering portion contacts a surface of the elastic portion of the supporting member on a side opposite to the information recording medium.

In this way, after the second lifting/ lowering portion contacts the elastic portion, the head main body rotates around the contacting portion of the second lifting/ lowering portion and the elastic portion. Therefore, the distance from the head main body to the center of rotation can be shortened, making it possible to further reduce the amount that the first lifting/ lowering portion has to move in order to move the head main body to the second position. Accordingly, it is possible to reduce the height of the farthest portion of the magnetic head from the information recording medium when the head main body is moved to the second position. Consequently, using this magnetic head device, an information recording/ reproducing apparatus can be made thinner.

In the above-described first magnetic head device of the present invention, it is preferable that while the first lifting/ lowering portion moves away from the information recording medium, the second lifting/ lowering portion moves toward the information recording medium.

With this preferable structure, since the center of rotation of the head main body at the time of moving from the first position to the second position moves toward the information recording medium, it is possible to lower the position of the first lifting/ lowering portion when the head main body is in the second position. Accordingly, it is possible to reduce the height of the magnetic head when the head main body is moved to the second position. Consequently, using this magnetic head device, an information recording/reproducing apparatus can be made thinner.

Next, in the second magnetic head device of the present invention, while the first lifting/ lowering portion moves along a longitudinal direction of the magnetic head and contacts a surface of the supporting member on a side of the information recording medium so as to move the head main body from the first position to the second position, the second lifting/ lowering portion contacts a surface of the elastic portion of the supporting member on a side opposite to the information recording medium.

In this way, after the second lifting/lowering portion contacts the elastic portion, the head main body rotates around the contacting portion of the second lifting/ lowering portion and the elastic portion. Therefore, the distance from the head main body to the center of rotation can be shortened. Accordingly, it is possible to reduce the height of the farthest portion of the magnetic head from the information recording medium when the head main body is moved to the second position. Consequently, using this magnetic head device, an information recording/ reproducing apparatus can be made thinner.

In the above―described first and second magnetic head devices of the present invention, it also is preferable that the first lifting/lowering portion and the second lifting/ lowering portion are provided in a common member.

With this preferable structure, a lifting/lowering mechanism can be simplified, thus reducing the number of components.

Further, in the above-described first and second magnetic head devices of the present invention, it is preferable that a surface of the second lifting/lowering portion that is opposed to the supporting member is a curved surface protruding toward the supporting member.

With this preferable structure, it is possible to reduce the frictional force at the time when the head main body is moved in a radial direction of the information recording medium while the head main body is in the second position, thus achieving fast access.

The following is a description of embodiments of the present invention, with reference to the accompanying drawings.

### (First Embodiment)

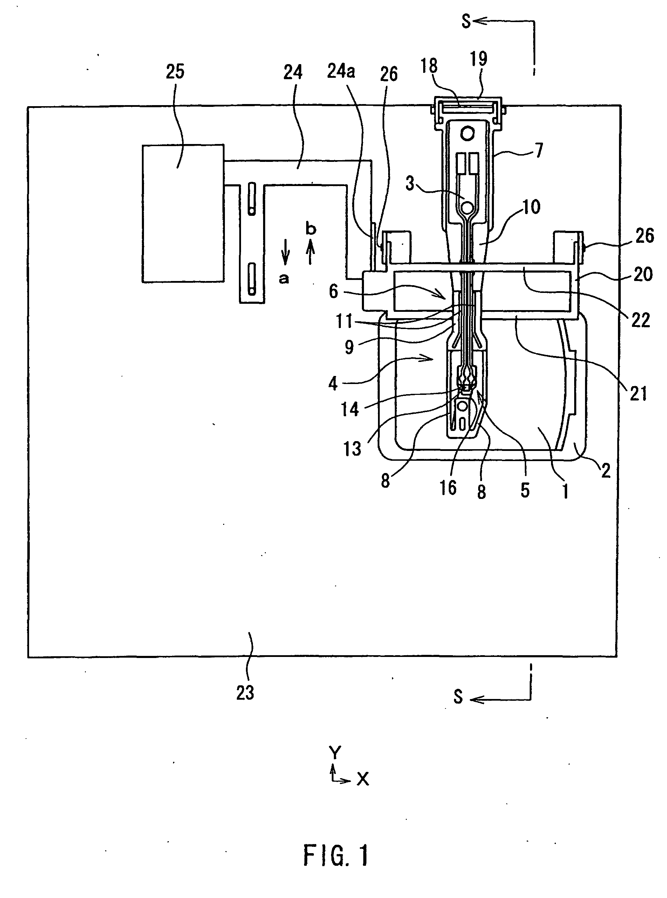

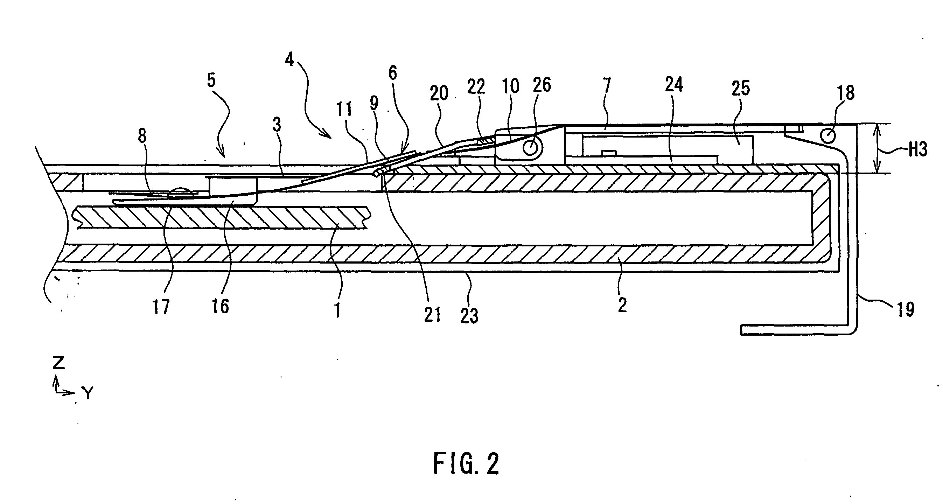

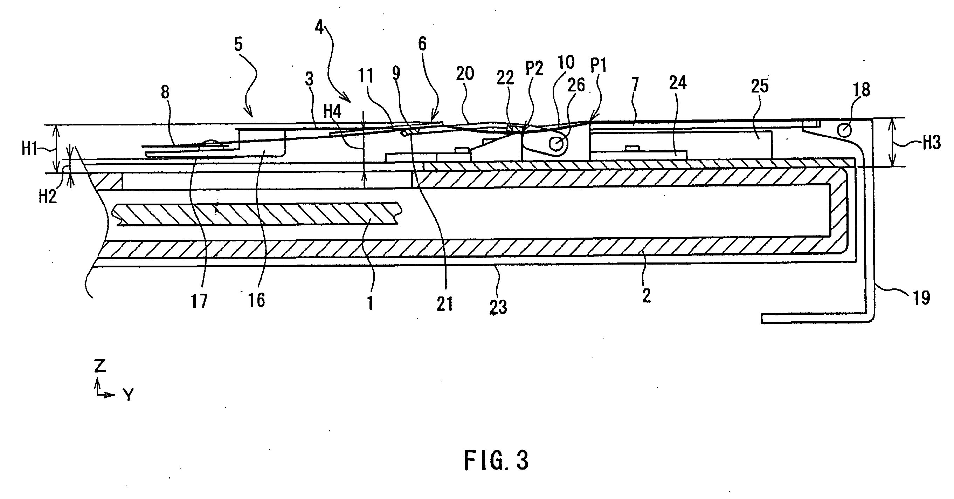

FIG. 1 is a plan view of a magnetic head device in a first embodiment of the present invention. As shown in the figure, an XYZ three-dimensional rectangular coordinate system is defined such that an X axis indicates a radial direction of an magneto―optical disk 1, a Y axis indicates a tangential direction thereof, and a Z axis indicates a normal direction thereof. For the convenience of description below, the Z-axis direction is set as a height direction, and the side farther from the magneto―optical disk 1 is referred to as an upper side, while the side closer thereto is referred to as a lower side. It should be noted that the terms "height", "upper" and "lower" are irrelevant to the orientation in which the magnetic head device is used in practice. FIG. 2 is a sectional side view of the magnetic head device shown in FIG. 1, taken along a line S-S and seen from an arrow direction, in a first position (recording state), and FIG. 3 is a sectional side view of the magnetic head device shown in FIG. 1, taken along the line S―S and seen from the arrow direction, in a second position (reproducing state). The same reference numerals are given to components having the same functions as in the conventional example shown in FIGs. 10 to 13, and detailed descriptions thereof are omitted here.

In FIGs. 1 to 3, numeral 6 denotes a supporting member, which is made of a thin spring material such as SUS304 or BeCu, for example. The supporting member 6 illustrated in the present embodiment has a first spring system 10 serving as a first elastic deformable portion that has one end fastened to a fastening portion 7 and is provided for following surface vibration of the magneto-optical disk 1 and applying an entire load, an intermediate portion 9 that is extended from the first spring system 10 while being inclined with respect to this first spring system 10 at a predetermined angle so as not to interfere with a cartridge 2 and formed to be a rigid body by being provided with draw ribs 11 formed by draw forming on both sides in the width direction, and a second spring system 8 serving as a second elastic deformable portion that is extended from the intermediate portion 9 at a predetermined angle with respect to the intermediate portion 9 and provided for following the surface vibration and surface shape of the magneto-optical disk 1.

The fastening portion 7 is made of a metal plate of such as iron or stainless steel. The fastening portion 7 fastens one end of the supporting member 6, is attached to a joint member 19 for connecting a magnetic head 4 and an optical head (not shown), which is opposed to the magnetic head 4 with the magneto―optical disk 1 interposed therebetween, via a shaft 18 in such a manner as to be freely rotatable within a YZ plane and is forced against the side of the magneto-optical disk 1 by a spring or the like, which is not shown in the figure.

As shown in FIG. 13, a head main body 5 includes a magnetic head element 15 formed by attaching a wound coil 14 to a central magnetic pole of an E-shaped magnetic core 13 made of a soft magnetic material such as ferrite, and a slider 16 made of a resin with excellent sliding characteristics, for example, polyphenylene sulfide or liquid crystal polymer. The magnetic head element 15 is attached integrally to the slider 16 such that an open end of the E―shaped magnetic core 13 is opposed to the magneto-optical disk 1, thereby forming the head main body 5.

Numeral 17 denotes a sliding portion, which is formed integrally on a surface of the slider 16 opposing the magneto-optical disk 1. The sliding portion 17 has a circular arc section, thereby gliding constantly in point contact over the magneto-optical disk 1 in a smooth manner.

Numeral 3 denotes a flexible printed board that is provided with wirings for transmitting a modulation signal to the head main body 5 and has one end adhered to the head main body 5 and the other end adhered to the fastening portion 7. One end of the flexible printed board 3 is soldered to both ends of lead wires of the coil 14, while the other end is connected to a driving circuit of the magnetic head, which is not shown in the figure.

The head main body 5 is fastened to the side of a moving end (free end) of the cantilevered supporting member 6 by fusing or gluing or formed in one piece therewith by integral molding of a resin. The fastening portion 7-side-end (fastened end) of the supporting member 6 is fastened to the fastening portion 7 by laser spot welding or the like.

Numeral 20 denotes a lifting mechanism formed of stainless steel, iron or resin, for example. The lifting mechanism 20 is attached in such a manner as to be freely rotatable within the YZ plane around a lifting/lowering rotation shaft 26 provided in a holder 23 for holding the cartridge 2. The lifting mechanism 20 has a first lifting/ lowering portion 21 that is provided on the side of the head main body 5 with respect to the lifting/lowering rotation shaft 26 and between the magnetic head 4 and the cartridge 2, and a second lifting/lowering portion 22 that is provided between the first lifting/lowering portion 21 and the lifting/lowering rotation shaft 26 and on the side opposite to the cartridge 2 with respect to the magnetic head 4. The first lifting/ lowering portion 21 and the second lifting/ lowering portion 22 both extend along the X axis.

Numeral 24 denotes a sliding member that is formed of stainless steel, iron or resin, for example, attached to the holder 23 in such a manner as to be slidable in the Y―axis direction and slides by a lifting/lowering driving portion 25, which is constituted by a motor, a gear etc.

In a part of the sliding member 24, an inclined surface 24a whose height in the Z―axis direction varies is formed along the Y―axis direction. The lifting mechanism 20 is forced by an elastic member such as a spring (not shown) so that its lower surface presses the inclined surface 24a of the sliding member 24. In this manner, a cam mechanism is formed in a portion where the inclined surface 24a of the sliding member 24 contacts the lifting mechanism 20. When the sliding member 24 moves in the direction indicated by an arrow *a* shown in FIG. 1, the inclined surface 24a lifts the lifting mechanism 20, so that the lifting mechanism 20 rotates in the direction that the first lifting/lowering portion 21 moves away from the cartridge 2. When the sliding member 24 moves in the direction indicated by an arrow b shown in FIG. 1, the force of the elastic member such as a spring displaces the lifting mechanism 20 in accordance with the change in height of the inclined surface 24a, so that the lifting mechanism 20 rotates in the direction that the first lifting/ lowering portion 21 moves toward the cartridge 2. At this time, although the second lifting/ lowering portion 22 also moves in the same direction as the first lifting/ lowering portion 21, it moves significantly less than the first lifting/ lowering portion 21 because of its position near the lifting/ lowering rotation shaft 26.

As shown in FIG. 2, in the first position (recording position) of the head main body 5, the lifting mechanism 20 does not contact the supporting member 6 and is spaced away from the magnetic head 4.

In the first position of the head main body 5, a portion that protrudes the most beyond the upper surface of the cartridge 2 in the Z-axis direction is the fastening portion 7. At this time, the height of the magnetic head 4 is defined by the height H3 from the upper surface of the cartridge 2 to the upper surface of the fastening portion 7.

Now, the head main body 5 is moved from the first position to the second position (reproducing position) as follows. As shown in FIG. 3, the movement of the sliding member 24 causes the lifting mechanism 20 to rotate around the lifting/ lowering rotation shaft 26, so that the first lifting/lowering portion 21 contacts the lower surface (the surface on the side of the magneto―optical disk 1) of the intermediate portion 9 of the magnetic head 4 so as to move the supporting member 6 and the head main body 5 away from the magneto-optical disk 1. At this time when the head main body 5 is moved away from the magneto-optical disk 1, an end portion (P1) of the first spring system 10 on the side of the fastening portion 7 serves as the center of rotation. When the lifting mechanism 20 rotates further, the upper surface (the surface opposite to the magneto―optical disk 1) of the first spring system 10 contacts the second lifting/ lowering portion 22. When the lifting mechanism 20 rotates still further, the first lifting/ lowering portion 21 lifts the intermediate portion 9 while the second lifting/ lowering portion 22 is suppressing the lifted amount of the first spring system 10 because the second lifting/ lowering portion 22 moves significantly less than the first lifting/ lowering portion 21. In this manner, after the second lifting/lowering portion 22 contacts the upper surface of the first spring system 10, the first spring system 10 elastically deforms at this contacting position by the rotation of the lifting mechanism 20. In other words, the center of rotation at the time when the head main body 5 is moved away from the magneto-optical disk 1 moves from the end portion (P1) of the first spring system 10 on the side of the fastening portion 7 to the above-described contacting position, i.e., a vicinity of the midpoint in a longitudinal direction of the first spring system 10 (P2). Then, the head main body 5 is lifted up to the second position where the gap H2 is secured between the head main body 5 and the cartridge 2, and the magnetic head 4 is held.

As described above, in the present embodiment, the center of rotation of the head main body 5 at the time of lifting/ lowering the head main body 5 moves to the position P2, which is closer to the head main body 5 than in the conventional case. Since the first spring system 10 and the intermediate portion 9 are connected at an angle protruding toward the side opposite to the magneto-optical disk 1, the center of rotation is moved to the position P2 close to this connection portion, making it possible to reduce the height H4 of the first lifting/ lowering portion 21 necessary for securing the gap H2 between the cartridge 2 and the head main body 5 in the second position. As a result, it becomes possible to reduce the height H1 of the highest portion of the magnetic head 4 (in the present example, the bent portion connecting the first spring system 10 and the intermediate portion 9) in the second position from the upper surface of the cartridge 2, thereby achieving a thinner magneto-optical recording/ reproducing apparatus.

Although the present embodiment has illustrated the structure in which the first lifting/lowering portion 21 and the second lifting/lowering portion 22 are provided in a single lifting mechanism 20 and they all move as one piece, the present invention is not limited to this structure. A similar effect can be obtained also by, for example, providing the first lifting/lowering portion 21 and the second lifting/ lowering portion 22 as different components and providing respective cam mechanisms for driving them independently.

Although the present embodiment has illustrated an example in which the supporting member 6 of the magnetic head 4 has the first spring system 10, the intermediate portion 9 and the second spring system 8, the present invention is not limited to this. It is needless to say that a similar effect can be obtained also by, for example, a magnetic head whose supporting member 6 is constituted by a first spring system and an intermediate portion and in which the head main body 5 is fastened to a front end of the intermediate portion.

Furthermore, it is desired that the contacting portion of the second lifting/ lowering portion 22 and the first spring system 10 has a curved surface protruding toward the first spring system 10. Such a desired structure reduces a frictional force when the magnetic head 4 moves for accessing in the radial direction of the magneto-optical disk 1 (X direction) in the state where the head main body 5 is in the second position.

As described above, in accordance with the magnetic head device of the first embodiment of the present invention, the lifting mechanism 20 including the first lifting/ lowering portion 21 disposed on the side of the magneto―optical disk 1 with respect to the supporting member 6 and the second lifting/ lowering portion 22 disposed on the side opposite to the magneto-optical disk 1 with respect to the supporting member 6 and on the side of the fastening portion 7 with respect to the first lifting/ lowering portion 21 is provided. While the first lifting/ lowering portion 21 is brought into contact with the surface of the intermediate portion 9 of the supporting member 6 on the side of the magneto-optical disk 1 so as to displace the head main body 5 from the first position to the second position, the second lifting/lowering portion 22 contacts the surface of the first spring system 10 of the supporting member 6 on the side opposite to the magneto-optical disk 1, and in the second position, the first spring system 10 elastically deforms in the vicinity of the contacting portion with the second lifting/lowering portion 22. Thus, even though the gap H2 as large as the conventional case is secured between the head main body 5 and the cartridge 2 in the second position, the height H4 of the first lifting/ lowering portion 21 from the cartridge 2 can be reduced compared with the conventional case. As a result, when the head main body 5 is in the second position, the height H1 of the portion of the magnetic head 4 that is farthest from the cartridge 2 can be reduced compared with the conventional case, thus achieving a still thinner magneto-optical recording/ reproducing apparatus.

### (Second Embodiment)

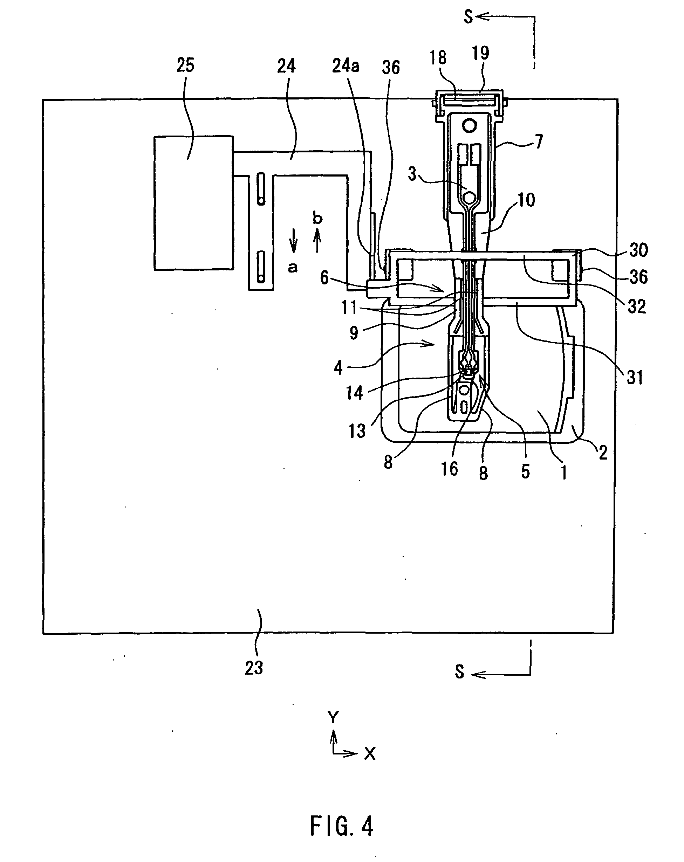

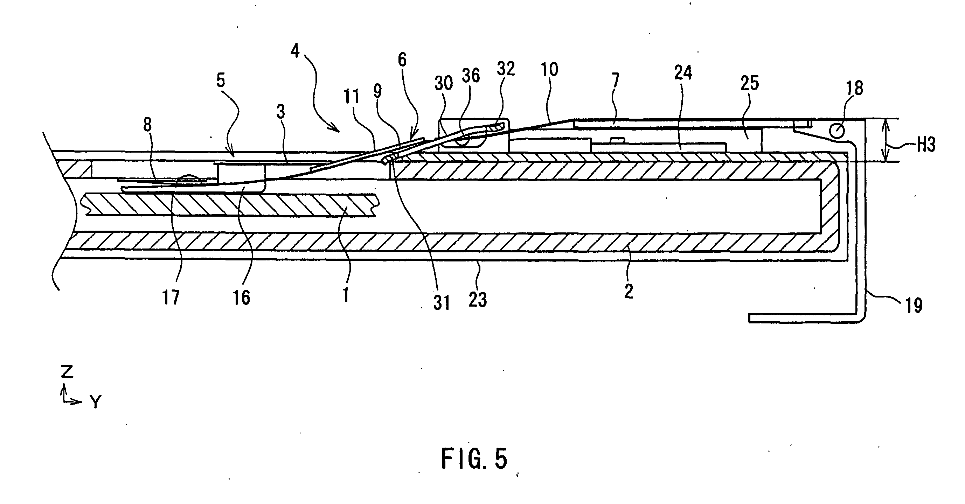

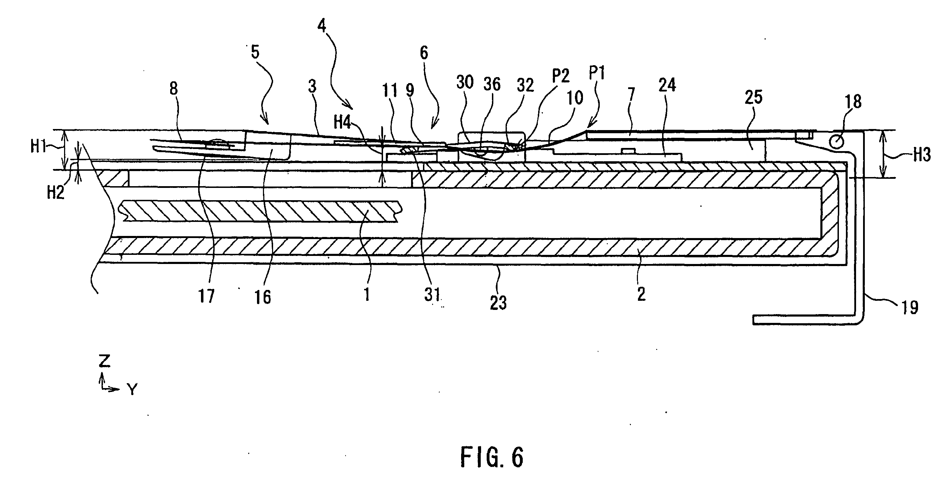

The following is a description of a magnetic head device according to a second embodiment of the present invention, with reference to FIGs. 4 to 6. FIG. 4 is a plan view of a magnetic head device in the second embodiment of the present invention, FIG. 5 is a sectional side view of the magnetic head device shown in FIG. 4, taken along a line S―S and seen from an arrow direction, in a first position, and FIG. 6 is a sectional side view of the magnetic head device shown in FIG. 4, taken along the line S-S and seen from the arrow direction, in a second position. The same reference numerals are given to components having the same functions as in the first embodiment shown in FIGs. 1 to 3, and detailed descriptions thereof are omitted here.

Numeral 30 denotes a lifting mechanism, which has a first lifting/lowering portion 31 and a second lifting/ lowering portion 32 and is attached in such a manner as to be freely rotatable within a YZ plane around a lifting/lowering rotation shaft 36 as in the first embodiment.

The magnetic head device of the second embodiment is different from that of the first embodiment in that the second lifting/ lowering portion 32 is disposed on the lifting mechanism 30 on the side of a fastening portion 7 with respect to the lifting/lowering rotation shaft 36.

In the first position of the head main body 5, neither the first lifting/lowering portion 31 nor the second lifting/ lowering portion 32 contacts a supporting member 6.

The head main body 5 is moved from the first position to the second position as follows. As in the first embodiment, the movement of a sliding member 24 causes the lifting mechanism 30 to rotate around the lifting/lowering rotation shaft 36, so that the first lifting/lowering portion 31 moves away from the magneto―optical disk 1 (is lifted) and contacts the lower surface (the surface on the side of the magneto-optical disk 1) of the intermediate portion 9 so as to move the supporting member 6 and the head main body 5 away from the magneto-optical disk 1. On the other hand, the second lifting/lowering portion 32 moves toward the magneto-optical disk 1 (is lowered) and contacts the upper surface (the surface opposite to the magneto-optical disk 1) of the first spring system 10. When the lifting mechanism 20 rotates further, the first lifting/lowering portion 31 lifts the intermediate portion 9 and the head main body 5, while the second lifting/lowering portion 32 lowers the contacting position with the first spring system 10. As a result, the first spring system 10 is elastically deformed to a greater degree than in the case of the first embodiment at the contacting position with the second lifting/lowering portion 32. In the present embodiment, the center of rotation at the time when the head main body 5 is moved away from the magneto―optical disk 1 also moves from the end portion (P1) of the first spring system 10 on the side of the fastening portion 7 to the above-described contacting position, i.e., a vicinity of the midpoint in a longitudinal direction of the first spring system 10 (P2). Then, the head main body 5 is lifted up to the second position where the gap H2 is secured between the head main body 5 and the cartridge 2, and the magnetic head 4 is held.

Since the second lifting/ lowering portion 32 is brought closer to the cartridge 2 in the second position, the center of rotation P2 at the time when the supporting member 6 moves from the first position to the second position moves toward the cartridge 2, making it possible to further reduce the height H4 of the first lifting/ lowering portion 31 necessary for securing the gap H2. As a result, it becomes possible to further reduce the height H1 of the highest portion of the magnetic head 4 (in the present example, an end portion of the supporting member 6 on the free end side or the upper surface of the head main body 5) in the second position from the upper surface of the cartridge 2, thereby achieving a still thinner magneto-optical recording/ reproducing apparatus.

As described above, in accordance with the magnetic head device of the second embodiment, the second lifting/lowering portion 32 is disposed on the side of the fastening portion 7 with respect to the lifting/ lowering rotation shaft 36 of the lifting mechanism 30, thereby lowering the center of rotation P2 of the supporting member 6 at the time when the head main body 5 moves from the first position to the second position. Therefore, the height H1 of the highest portion of the magnetic head 4 from the upper surface of the cartridge 2 in the second position can be made smaller than that in the case of the first embodiment. Moreover, the decrease in the height H1 allows the height H3 of the fastening portion 7 to be smaller than that in the first embodiment. Consequently, it is possible to achieve a still thinner magneto―optical recording/ reproducing apparatus.

### (Third Embodiment)

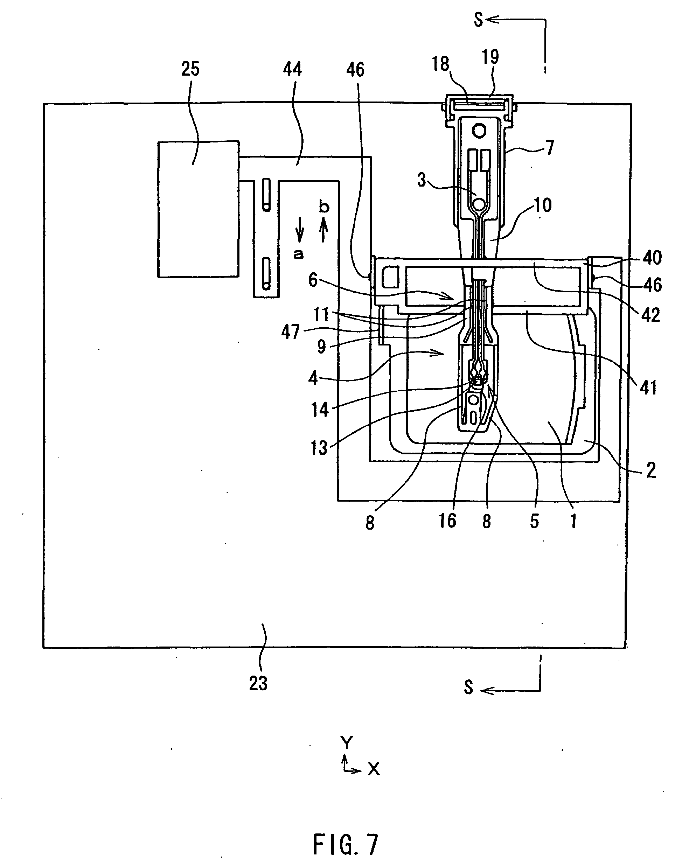

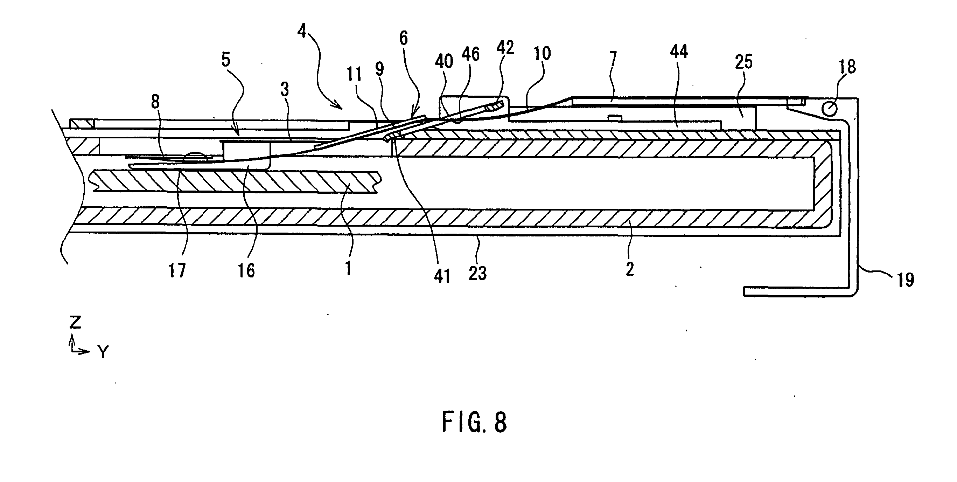

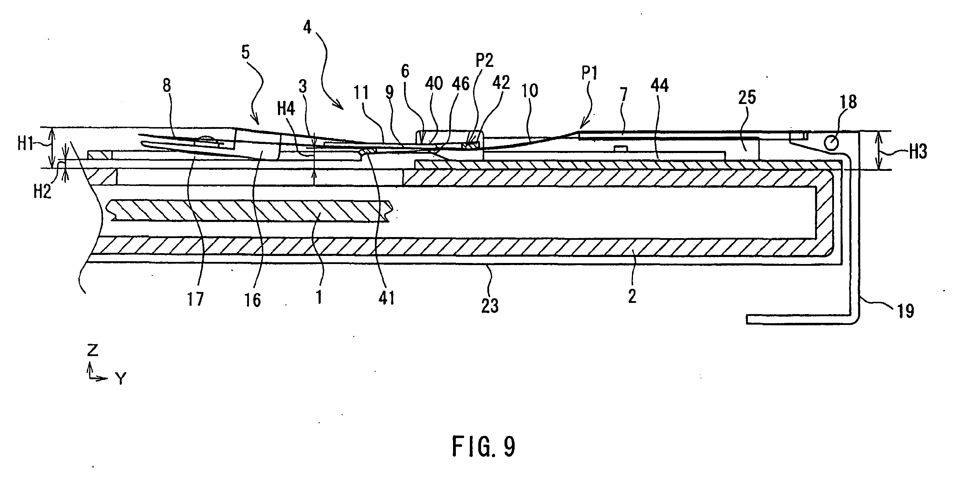

The following is a description of a magnetic head device according to a third embodiment of the present invention, with reference to FIGs. 7 to 9. FIG. 7 is a plan view of a magnetic head device in the third embodiment of the present invention, FIG. 8 is a sectional side view of the magnetic head device shown in FIG. 7, taken along a line S-S and seen from an arrow direction, in a first position, and FIG. 9 is a sectional side view of the magnetic head device shown in FIG. 7, taken along the line S―S and seen from the arrow direction, in a second position. The same reference numerals are given to components having the same functions as in the second embodiment shown in FIGs. 4 to 6, and detailed descriptions thereof are omitted here.

Numeral 40 denotes a lifting mechanism, which has a first lifting/lowering portion 41 and a second lifting/ lowering portion 42 and is attached in such a manner as to be freely rotatable within a YZ plane around a lifting/lowering rotation shaft 46 as in the second embodiment. Numeral 44 denotes a sliding member, which is attached to a holder 23 in such a manner as to be slidable in a Y―axis direction and slides by a lifting/lowering driving portion 25 as in the second embodiment. Numeral 47 denotes an inclined surface formed along the Y―axis direction whose height in a Z-axis direction varies, and this inclined surface 47 is fastened to the holder 23. The lifting mechanism 40 is forced by an elastic member such as a spring (not shown) so that its lower surface presses the inclined surface 47. In this manner, a cam mechanism is formed in a portion where the inclined surface 47 contacts the lifting mechanism 40.

The magnetic head device of the third embodiment is different from that of the second embodiment in the following points. First, the lifting/lowering rotation shaft 46 is provided in the sliding member 44, and when the sliding member 44 moves in the Y―axis direction, the lifting/ lowering rotation shaft 46 and the lifting mechanism 40 including the first lifting/lowering portion 41 and the second lifting/ lowering portion 42 also move in the Y―axis direction together with the sliding member 44. Second, even when the sliding member 44 moves in the Y―axis direction, the inclined surface 47 remains still because it is fastened to the holder 23.

The head main body 5 is moved from the first position to the second position as follows. When the lifting/ lowering driving portion 25 drives the sliding member 44 to move in the direction indicated by an arrow *a* shown in FIG. 7, the lifting mechanism 40 attached to the sliding member 44 via the lifting/lowering rotation shaft 46 in a freely rotatatable manner also moves in the direction of the arrow *a*. Since the lower surface of the lifting mechanism 40 is in contact with the inclined surface 47 fastened to the holder 23, the movement of the lifting mechanism 40 in the direction of the arrow *a* causes the inclined surface 47 to lift the lifting mechanism 40. As a result, the lifting mechanism 40 rotates around the lifting/ lowering rotation shaft 46. Thus, the first lifting/lowering portion 41 moves away from the magneto-optical disk 1 along the Z―axis direction and moves toward the head main body 5 along the Y―axis direction so as to contact the lower surface (the surface on the side of the magneto-optical disk 1) of the intermediate portion 9, thereby moving the supporting member 6 and the head main body 5 away from the magneto-optical disk 1. On the other hand, the second lifting/lowering portion 42 moves toward the magneto-optical disk 1 along the Z-axis direction and toward the intermediate portion 9 along the Y―axis direction so as to contact the upper surface (the surface opposite to the magneto―optical disk 1) of the first spring system 10, thereby elastically deforming the first spring system 10. In the present embodiment, the contacting position P2 of the second lifting/ lowering portion 42 and the first spring system 10 also serves as the center of rotation when the head main body 5 moves away from the magneto―optical disk 1. However, as the head main body 5 moves upward, the center of rotation (the contacting position) P2 moves toward the intermediate portion 9. Since the first spring system 10 and the intermediate portion 9 are connected at an angle protruding toward the side opposite to the magneto-optical disk 1, the center of rotation P2 is moved to the position close to the portion connecting the first spring system 10 and the intermediate portion 9, so that the height H4 of the first lifting/lowering portion 41 necessary for securing the gap H2 between the cartridge 2 and the head main body 5 in the second position can be made even smaller than that in the second embodiment. As a result, it becomes possible to further reduce the height H 1 of the highest portion of the magnetic head 4 (in the present example, an end portion of the supporting member 6 on the free end side or the upper surface of the head main body 5) in the second position from the upper surface of the cartridge 2, thereby achieving an even thinner magneto-optical recording/ reproducing apparatus.

As described above, in accordance with the magnetic head device of the third embodiment, a mechanism for moving a lifting/ lowering rotation shaft of a lifting mechanism toward the head main body 5 while the head main body 5 is moved from the first position to the second position is added to the second embodiment. Therefore, the height H1 of the highest portion of the magnetic head 4 from the upper surface of the cartridge 2 in the second position can be made smaller than that in the second embodiment. Consequently, it is possible to achieve an even thinner magneto-optical recording/ reproducing apparatus.

Although the present embodiment has illustrated the structure in which both of the first and second lifting/ lowering portions move toward the free end of the magnetic head 4 while the head main body 5 is moved from the first position to the second position, the present invention is not limited to this structure. Both of the first and second lifting/lowering portions also may move toward the fixed end of the magnetic head 4. Alternatively, the first and second lifting/ lowering portions may be formed as different components and move toward each other or away from each other.

Further, although the present embodiment has illustrated the structure in which the mechanism for moving the lifting/ lowering rotation shaft of the lifting mechanism in the Y―axis direction is added to the second embodiment, the present invention is not limited to this structure. For example, it also may be possible to add a mechanism for moving the lifting/lowering rotation shaft of the lifting mechanism in the Y―axis direction to the first embodiment. In this case, the height H1 of the magnetic head 4 in the second position also can be made smaller than that in the first embodiment.

In addition, although the present embodiment has illustrated the structure in which the first lifting/ lowering portion 41 and the second lifting/lowering portion 42 move in the Y―axis direction and the Z-axis direction while the head main body 5 is moved from the first position to the second position, the present invention is not limited to this structure. For example, it may be possible to move the first lifting/ lowering portion 41 toward the head main body 5 along the Y axis without changing the position in the Z-axis direction (namely, the height). In this way, the first lifting/lowering portion 41 contacts the lower surface of the intermediate portion 9, so that the supporting member 6 and the head main body 5 can be spaced away from the magneto-optical disk 1. At this time, while the head main body 5 is moving to the second position, the upper surface of the first spring system 10 contacts the second lifting/ lowering portion 42. Since then, the contacting position P2 of the second lifting/ lowering portion 42 and the first spring system 10 serves as the center of rotation for moving the head main body 5 away from the magneto―optical disk 1. As a result, it is possible to further reduce the height H1 of the highest portion of the magnetic head 4 from the upper surface of the cartridge 2 in the second position, thus achieving a thinner magneto-optical recording/ reproducing apparatus. In this case, while the first lifting/ lowering portion 41 moves toward the head main body 5 along the Y axis, the second lifting/ lowering portion 42 may remain still, move in the Y―axis direction (preferably, moves toward the fixed end side), or move in the Z―axis direction (preferably, moves toward the magneto-optical disk 1).

The first to third embodiments described above have illustrated the magnetic head device for information recording media on a magneto―optical recording system as an example, the magnetic head device of the present invention is not limited to this. For example, the present invention also can be applied to a magnetic head device for information recording media on a magnetic recording system. In such cases, recording and reproducing are carried out in the state where the head main body is in the first position.

The invention may be embodied in other specific forms without departing from the spirit or essential characteristics thereof. The embodiments disclosed in this application are to be considered in all respects as illustrative and not restrictive, the scope of the invention being indicated by the appended claims rather than by the foregoing description, all changes that come within the meaning and range of equivalency of the claims are intended to be embraced therein.

## Claims

1. A magnetic head device comprising:
a magnetic head comprising
a cantilevered supporting member having one end serving as a fastened end, the other end serving as a free end and an elastic portion between the fastened end and the free end, and
a head main body attached to the free end of the supporting member, the magnetic head having a first position in which the head main body is located close to or in contact with an information recording medium so as to perform recording or reproducing and a second position in which the head main body is away from the information recording medium;
a first lifting/lowering portion that is disposed on a side of the information recording medium with respect to the supporting member; and
a second lifting/ lowering portion that is disposed on a side opposite to the information recording medium with respect to the supporting member and on a side of the fastened end with respect to the first lifting/lowering portion;
wherein while the first lifting/ lowering portion moves away from the information recording medium and contacts a surface of the supporting member on a side of the information recording medium so as to move the head main body from the first position to the second position, the second lifting/ lowering portion contacts a surface of the elastic portion of the supporting member on a side opposite to the information recording medium.

2. The magnetic head device according to claim 1, wherein while the first lifting/ lowering portion moves away from the information recording medium, the second lifting/ lowering portion moves toward the information recording medium.

3. A magnetic head device comprising:
a magnetic head comprising
a cantilevered supporting member having one end serving as a fastened end, the other end serving as a free end and an elastic portion between the fastened end and the free end, and
a head main body attached to the free end of the supporting member, the magnetic head having a first position in which the head main body is located close to or in contact with an information recording medium so as to perform recording or reproducing and a second position in which the head main body is away from the information recording medium;
a first lifting/lowering portion that is disposed on a side of the information recording medium with respect to the supporting member; and
a second lifting/ lowering portion that is disposed on a side opposite to the information recording medium with respect to the supporting member and on a side of the fastened end with respect to the first lifting/lowering portion;
wherein while the first lifting/ lowering portion moves along a longitudinal direction of the magnetic head and contacts a surface of the supporting member on a side of the information recording medium so as to move the head main body from the first position to the second position, the second lifting/ lowering portion contacts a surface of the elastic portion of the supporting member on a side opposite to the information recording medium.

4. The magnetic head device according to claim 1 or 3, wherein the first lifting/lowering portion and the second lifting/lowering portion are provided in a common member.

5. The magnetic head device according to claim 1 or 3, wherein a surface of the second lifting/lowering portion that is opposed to the supporting member is a curved surface protruding toward the supporting member.

## Amended claims

### Amended claims under Art. 19.1 PCT

**1.** (Amended) A magnetic head device comprising:
a magnetic head comprising
a cantilevered supporting member having one end serving as a fastened end, the other end serving as a free end and an elastic portion between the fastened end and the free end, and
a head main body attached to the free end of the supporting member, the magnetic head having a first position in which the head main body is located close to or in contact with an information recording medium so as to perform recording or reproducing and a second position in which the head main body is away from the information recording medium;
a first lifting/ lowering portion that is disposed on a side of the information recording medium with respect to the supporting member; and
a second lifting/ lowering portion that is disposed on a side opposite to the information recording medium with respect to the supporting member and on a side of the fastened end with respect to the first lifting/ lowering portion;
wherein while the first lifting/ lowering portion moves away from the information recording medium and contacts a surface of the supporting member on a side of the information recording medium so as to move the head main body from the first position to the second position, the second lifting/ lowering portion moves toward the information recording medium and contacts a surface of the elastic portion of the supporting member on a side opposite to the information recording medium.

**2.** (Canceled)

**3.** A magnetic head device comprising:
a magnetic head comprising
a cantilevered supporting member having one end serving as a fastened end, the other end serving as a free end and an elastic portion between the fastened end and the free end, and
a head main body attached to the free end of the supporting member, the magnetic head having a first position in which the head main
